# EUROPEAN PATENT SPECIFICATION

(11) **EP 2 129 144 B1**
(45) Date of publication and mention of the grant of the patent: **03.08.2016**
(21) Application number: 08710855.1
(22) Date of filing: 06.02.2008
(51) Int. Cl.: H04W 74/08, H04W 74/00

(54) **MOBILE STATION, RADIO ACCESS NETWORK DEVICE, AND MOBILE COMMUNICATION SYSTEM**
MOBILSTATION, FUNKZUGANGSNETZEINRICHTUNG UND MOBILKOMMUNIKATIONSSYSTEM
STATION MOBILE, DISPOSITIF DE RÉSEAU À ACCÈS RADIO, ET SYSTÈME DE COMMUNICATION MOBILE

(30) Priority: 07.02.2007 JP 2007028627; 25.06.2007 JP 2007167008
(43) Date of publication of application: 02.12.2009
(73) Proprietor: NTT DOCOMO, INC., Chiyoda-ku Tokyo 100-6150 (JP)
(72) Inventor: ISHII, Minami, Chiyoda-ku Tokyo 100-6150 (JP); UMESH, Anil, Chiyoda-ku Tokyo 100-6150 (JP); ABETA, Sadayuki, Chiyoda-ku Tokyo 100-6150 (JP)
(74) Representative: Hoffmann Eitle
(86) International application number: PCT/JP2008/051959
(87) International publication number: WO 2008/096789

(56) References cited:
- WO-A2-2005/050852
- JP-A- 2002 199 432
- JP-A- 2002 535 900
- JP-A- 2004 193 650
- NTT DOCOMO ET AL: "Uplink synchronization", 3GPP DRAFT; R2-070278, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133367, [retrieved on 2007-01-12]
- QUALCOMM EUROPE: "RACH and Mobility", 3GPP DRAFT; R2-063279, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132768, [retrieved on 2006-11-01]
- TEXAS INSTRUMENTS INC: "Optimized Handover method for reducing latencies in UL synchronization and initial UL allocation in E-UTRA", 3GPP DRAFT; R2-070081_OPTIMIZED_METHOD_FOR_REDUCING_HA NDOVER_LATENCIES_T 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133197, [retrieved on 2007-01-12]
- NTT DOCOMO ET AL: "Initial Access Procedure in LTE", 3GPP DRAFT; R2-062911_RACH_PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20061005, 5 October 2006 (2006-10-05), XP050132429, [retrieved on 2006-10-05]
- NOKIA: "Non-contention based handover execution", 3GPP DRAFT; R2-063082 NON CONTENTION HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132591, [retrieved on 2006-11-01]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.1, 1 November 2006 (2006-11-01), pages 1-64, XP050380377,

## Description

### BACKGROUND OF THE INVENTION

### 1. Field of the Invention

The present invention relates to mobile stations, radio access network apparatuses, and mobile communications systems.

### 2. Description of the Related Art

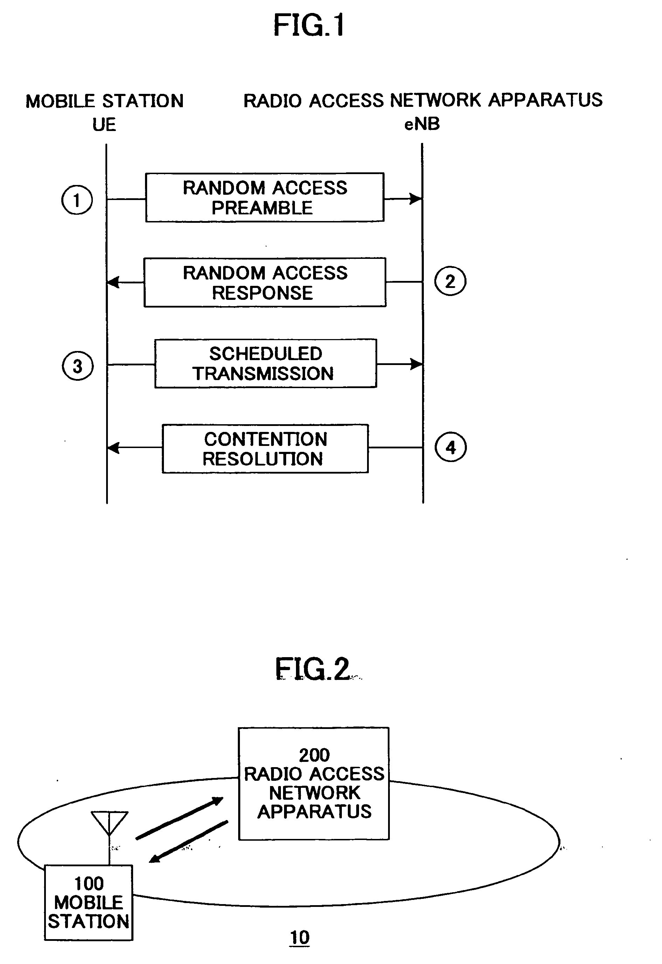

As illustrated in FIG. 1, a mobile station UE transmits a Random access preamble to a radio access network apparatus eNB to request for starting a communication when the mobile station starts or restarts a communication with the radio access network apparatus in Long Term Evolution (LTE), which is being considered for 3G systems. Before multiple mobile stations can simultaneously transmit the Random access preambles, the radio access network apparatus reports, to the respective mobile stations, multiple Signatures available for the respective mobile stations. The mobile station randomly selects a Signature from the multiple Signatures reported in advance, and transmits the Random access preamble using the selected Signature. The radio access network apparatus which has detected one or more Signatures returns, on a shared data channel, one or more Random access responses to the detected one or more Signatures.

The radio access network apparatus which has received the Random access preamble cannot identify whether the mobile station is starting a new communication, making a new connection to a cell for handover to, or restarting a communication. Therefore, the following three types of communication setup information are newly assigned on a uniform basis to the respective Signatures received.
Uplink allocation resource (UL grant)
Uplink timing information (UL timing advance)
Cell-specific user-specific identifier (C-RNTI: Cell specific radio network temporal identifier)

The mobile station which has transmitted the Random access preamble receives the Random access response from the radio access network apparatus, and receives the UL grant, UL timing advance, and C-RNTI that are allocated to the Signature transmitted by the mobile station.

Further, NTT DOCOMO ET AL: "Uplink synchronization", 3GPP DRAFT; R2-070278, vol. RAN WG2, relates to uplink synchronization. More specifically, D1 relates to a mechanism that ensures that uplink synchronization is obtained before resuming downlink/uplink transmission after long uplink transmission inactivity.

QUALCOMM EUROPE: "RACH and Mobility", 3GPP DRAFT; R2-063279, vol. RAN WG2, relates to an access procedure for forward handover. It is described that the mobile station accesses the system by sending a signature sequence in response to failure of radio link with serving cell. A signature sequence is selected from a pool of sequences reserved for handover. Upon successful decoding of an access probe, the target eNB responds with uplink access grant command message.

TEXAS INSTRUMENTS INC: "Optimized Handover method for reducing latencies in UL synchronization and initial UL allocation in E-UTRA", 3GPP DRAFT; R2-070081, vol. RAN WG2, relates to reducing intra LTE inter-eNB handover latencies. The described method aims to pre-synchronize in parallel with the context transfer process between eNBs. It attempts to use the implicit timing advance computation method if possible. If not, the method then attempts to use pre-communicated (between eNBs) reserved signatures/contention free access opportunities, or a contention based random access if the contention free opportunities are not available.

In this way, when a communication is started using the Random access preamble, multiple mobile stations may select and use the same Signature, in which case, collision occurs among the Signatures and the multiple mobile stations end up using the same resource for transmitting. Thus, there is a problem that, in a radio access network apparatus, Scheduled Transmissions ((3) in FIG. 1) are simultaneously transmitted from the multiple mobile stations using the same uplink radio resource, so that a correct uplink signal cannot be received.

Moreover, in a Random access response in the LTE, the UL grant, Timing advance, and C-RNTI sent to the respective Signatures need to be returned in a uniform manner regardless of the state of the mobile station. Thus, even unnecessary information may be allocated for the mobile station which already has the C-RNTI of the cell for handover to, or a mobile station which already has the C-RNTI for restarting data transmission, so that downlink radio resources may be wasted.

In order to solve the above problem, a radio access network apparatus is provided, which communicates with a mobile station using a dedicated uplink channel, a downlink shared data channel, and a downlink signaling control channel. The apparatus includes:
a dedicated uplink channel allocating unit which allocates, to a mobile station starting or restarting communications, on a downlink shared data channel, a dedicated uplink channel to be used by the mobile station;
a dedicated uplink channel reception detecting unit which detects, on the allocated dedicated uplink channel, a reception of an uplink transmission from the mobile station; and
a downlink transmitting unit which, when the dedicated uplink channel reception of the mobile station is detected, transmits a response, to the mobile station, using a downlink shared data channel and a downlink signaling control channel.

The radio access network apparatus makes it possible to efficiently utilize downlink radio resources.

Moreover, the mobile station is provided, which communicates with a radio access network apparatus using a dedicated uplink channel, a downlink shared data channel, and a downlink signaling control channel. The mobile station includes,
a dedicated uplink channel allocating information receiving unit which receives, on a downlink shared data channel, allocation information on a dedicated uplink channel to be used;
a dedicated uplink channel setting unit which sets the allocated dedicated uplink channel;
an uplink transmit unit for transmitting uplink on the set dedicated uplink channel; and
a data receive unit which receives downlink with a user-specific identifier after the end of the uplink transmission.

The mobile station makes it possible to efficiently utilize downlink radio resources.

Furthermore, a mobile communications system is provided, which communicates with a mobile station and a radio access network apparatus using a dedicated uplink channel, a downlink shared data channel, and a downlink signaling control channel. In the mobile communications system, the radio access network apparatus includes
a dedicated uplink channel allocating unit which allocates, to a mobile station starting or restarting communications, on the downlink shared data channel, a dedicated uplink channel to be used by the mobile station;
a dedicated uplink channel reception detecting unit which detects, on the allocated dedicated uplink channel, a reception of an uplink transmission from the mobile station; and
a downlink transmitting unit which, when the dedicated uplink channel reception of the mobile station is detected, transmits a response, to the mobile station, using a downlink shared data channel and a downlink signaling control channel,
and wherein the mobile station includes
a dedicated uplink channel allocating information receiving unit which receives on a downlink shared data channel allocation information to be used on a dedicated uplink channel;
a dedicated uplink channel setting unit which sets the allocated dedicated uplink channel; and
an uplink transmit unit which transmits uplink on the set dedicated uplink channel; and
a data receive unit which receives downlink with a user-specific identifier after the end of the uplink transmission.

The mobile communications system makes it possible to efficiently utilise downlink radio resources.

According to an example of the present invention, eliminating unnecessary transmissions of UL grant, UL timing advance, or C-RNTI (Cell specific radio network temporal identifier) makes it possible to implement a mobile station, a radio access network apparatus, and a mobile communications system that allow an efficient use of downlink radio resources.

Contribution R2-063082 to 3GPP TSG-RAN WG2 entitled "Non-contention based handover execution", by Nokia, discloses a method for non-contention based handover, whereby the target access network apparatus, Target eNodeB, decides a suitable dedicated UL channel allocation for a UE upon receiving the UE's context from the source access network apparatus, Source eNodeB, and provides it to the Source eNB at an answer. The source eNB then sends it along with the HO command to the UE. Alternatively, the UE can just obey the HO command and start listening to an allocation table to get the allocation for dedicated UL channel in the downlink shared channel of the Target eNB.

Contribution R2-070081 to 3GPP TSG-RAN WG2 entitled "Optimized Handover method for reducing latencies in UL synchronization and initial UL allocation in E-UTRA", by Texas Instruments Inc., discloses an alternative method for non-contention based handover. The Source eNB maintains a pool of dedicated UL channels, at least one, received from each neighbouring eNB for HO initial transmission to it as Target eNB. The Source eNB then allocates to the UE along with the HO command a suitable dedicated UL channel. This contribution also addresses the problem of lack of availability of dedicated UL channels, and discloses the feature of reporting, by the Source eNB, along with the HO command, an indication for contention-based HO initial access in case that no dedicated HO access opportunity from the Target eNB is available at the Source eNB.

### Summary

The object of the present invention is achieved by the subject-matter of the independent claims.

Preferred embodiments are set out in the dependent claims.

### BRIEF DESCRIPTION OF THE DRAWINGS

FIG. 1 illustrates a sequence chart showing a sequence of starting and restarting a communication of a mobile station;
FIG. 2 is an overview diagram of a mobile communications system which includes a radio access network apparatus and a mobile station;
FIG. 3 is a functional block diagram of a mobile station according to an embodiment of the present invention; and
FIG. 4 is a functional block diagram of a radio access network apparatus according to an embodiment of the present invention.

### DESCRIPTION OF THE PREFERRED EMBODIMENTS

### [Description of Notations]

100 mobile station
102 data transmitter/receiver
104 dedicated uplink channel allocation information receiver
106 dedicated uplink channel setting unit 108 transmit signal generator
200 radio access network apparatus
202 data transmitter/receiver
204 downlink shared data channel/downlink signaling control channel generator
206 dedicated uplink channel selector
208 communications start and restart determining unit
210 dedicated uplink channel detector
212 mobile station specifying unit

### [Best Mode of Carrying Out the Invention]

In the following, best modes for carrying out the invention are described based on the following embodiments with reference to the drawings. Throughout the drawings for explaining the embodiments, the same letters are used for those elements having the same functions, so that repetitive explanations are omitted.

In LTE, a radio access network apparatus, when transmitting a handover request signal to a mobile station, allocates to the mobile station, together with the handover request signal, a user-specific Signature used at the time the mobile station connects to a cell for handover to in order to avoid a Signature collision. The mobile station which has received the handover request signal uses the allocated user-specific Signature to transmit a Random access preamble to the cell for handover to. Now an embodiment of the present invention is considered with respect to a sequence in which the radio access network apparatus which has detected the Random access preamble returns a Random Access Response.

A mobile communications system according to an embodiment of the present invention is described with reference to FIG. 2.

A mobile communications system 10 includes a mobile station 100 and a radio access network apparatus 200.

The mobile station 100 and the radio access network apparatus 200 communicate using a dedicated uplink channel, a downlink shared data channel, and a downlink signaling control channel.

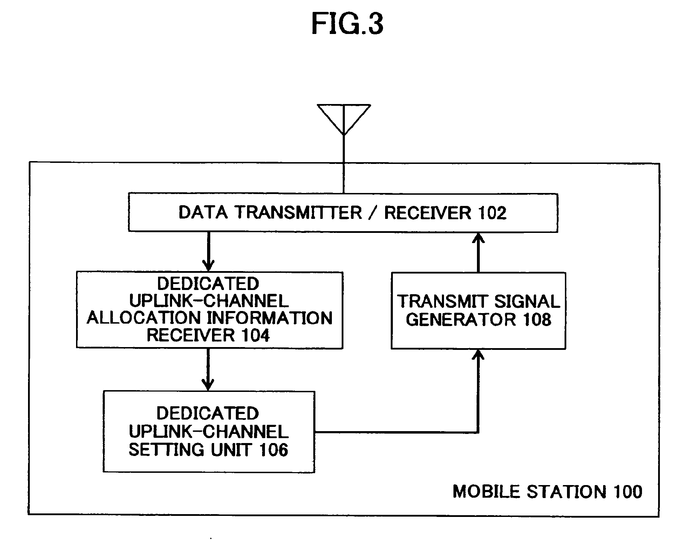

Now a mobile station 100 according to an embodiment of the present invention is described with reference to FIG. 3.

The mobile station 100 includes a data transmitter/receiver 102 with an antenna; a dedicated uplink channel allocation information receiver 104, which is connected to the data transmitter/receiver 102; a dedicated uplink channel setting unit 106, which is connected tb the dedicated uplink channel allocation information receiver 104; and a transmit signal generator 108, which is connected to the dedicated uplink channel setting unit 106 and the data transmitter/receiver 102.

The data transmitter/receiver 102 transmits and receives data. For example, the mobile station 100 may determine whether the downlink signaling control channel is destined for the mobile station itself based on the C-RNTI received on the downlink signaling control channel. Moreover, information of a radio resource of a downlink data channel destined for the mobile station may be received from the downlink shared radio resource information transmitted on the downlink signaling control channel.

The dedicated uplink channel allocation information receiver 104 receives a dedicated uplink channel allocation information signal indicating dedicated uplink channel allocation information for the mobile station. For example, the dedicated uplink channel allocation information signal is transmitted on the downlink shared data channel as a part of a signal requesting for restarting downlink transmission or a handover request signal. Moreover, the dedicated uplink channel allocation information is communications setting information for setting any one of a mobile station-specific Signature used on the Access preamble, an identifier or a code number that is used for uplink, and an uplink radio resource.

When a shortage occurs with respect to the dedicated uplink channel provided in advance at the radio access network apparatus, that the Random access preamble signal is to be used may be reported to the mobile station in the downlink shared data channel.

The dedicated uplink channel setting unit 106 sets a dedicated uplink channel according to dedicated uplink allocation information received at the uplink shared channel allocation information receiver 104.

The transmit signal generator 108 generates a signal to be transmitted on the dedicated uplink channel which is set at the dedicated uplink channel setting unit 106, and transmits the generated signal to the data transmitter and receiver 102. The data transmitter and receiver 102 of the mobile station 100 wirelessly transmit the generated signal to the radio access network apparatus. In this way, the mobile station transmits, to the radio access network apparatus, an access preamble, for example.

The mobile station 100 which has transmitted the generated signal from the data transmitter/receiver 102 receives a downlink signaling control channel and a downlink shared data channel based on the C-RNTI.

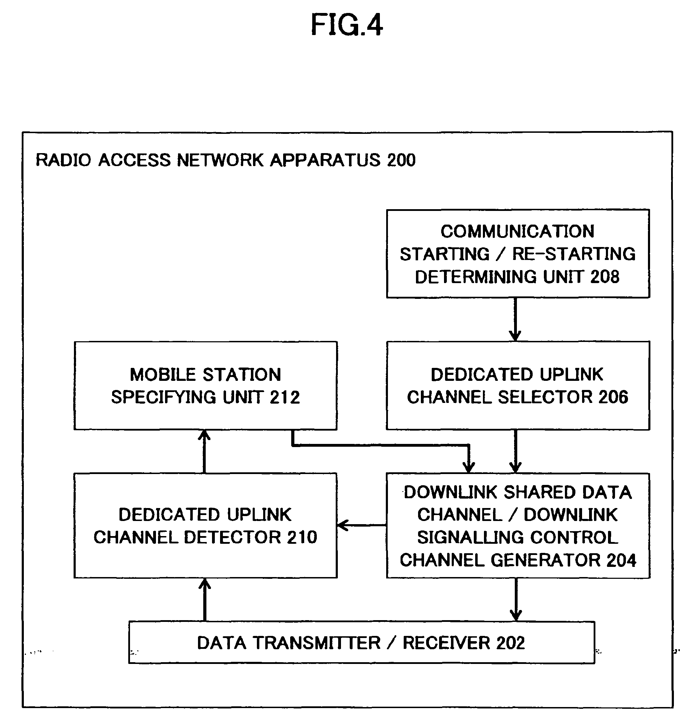

Now a radio access network apparatus 200 according to an embodiment of the present invention is described with reference to FIG. 4. For convenience of explanation, a radio access network apparatus which wirelessly communicates with a mobile station is explained. However, more generally, the radio access network apparatus may communicate not only with a mobile station, but also user equipment (UE) including a fixed station.

The radio access network apparatus 200 includes a data transmitter/receiver 202; a downlink shared data channel/downlink signaling control channel generator 204, which is connected to the data transmitter/receiver 202; a dedicated uplink channel selector 206, which is connected to the downlink shared data channel/downlink signaling control channel generator 204; and a communication start/restart determining unit 208, which is connected to the dedicated uplink channel selector 206. Moreover, the radio access network apparatus 200 includes a dedicated uplink channel detector 210, which is connected to the downlink shared data channel/downlink signaling control channel generator 204; and a mobile station specifying unit 212, which is connected to the dedicated uplink channel detector 210.

The communication start/restart determining unit 208 determines whether a mobile station to be managed by the radio access network apparatus starts or restarts communications. The communications start means that the mobile station being instructed to conduct a handover starts communications with the radio access network apparatus for handover to, for example. Moreover, the communications restart means a communications restart when downlink data to the mobile station performing intermittent reception is produced, for example.

For a mobile station which needs communications start or restart, the dedicated uplink channel selector 206 selects dedicated uplink channel allocation information to be used by the mobile station. The dedicated uplink channel allocation information is any one of an uplink radio resource, an uplink identifier or code number, and Signature of an Access preamble, for example.

If a shortage occurs with respect to the dedicated uplink channel provided in advance at the radio access network apparatus, that the Random access preamble signal is to be used for uplink may be reported to the mobile station in the downlink shared data channel.

The downlink shared data channel/downlink signaling control channel generator 204 generates a dedicated uplink channel allocation information signal indicating the dedicated uplink channel allocation selected at the dedicated uplink channel selector 206. For example, the dedicated uplink channel allocation information signal is transmitted on the downlink shared data channel as a part of a signal requesting for restarting downlink data transmission or a handover request signal.

The dedicated uplink channel detector 210 receives the dedicated uplink channel allocation transmitted as a part of the signal generated at the downlink shared data channel/downlink signaling control channel generator 204, and detects the presence/absence of uplink transmission in the dedicated uplink channel. The dedicated uplink channel is detected through a value of correlation with a Signature of access preamble allocated as dedicated uplink channel allocation information, for example.

The mobile station specifying unit 212 specifies the mobile station with the dedicated uplink channel detected at the dedicated uplink channel detector 210. For example, when a mobile station-specific Signature used on an access preamble is allocated as an uplink shared channel, the mobile station is specified using the Signature. Moreover, when a mobile station specific code is allocated as dedicated uplink channel allocation information, the mobile station is specified based on the outcome of identifying the mobile station-specific code.

The mobile station specifying unit 212 transmits the mobile station-specific result to the downlink shared data channel/downlink signaling control channel generator 204. The downlink shared data channel/downlink signaling control channel generator 204 determines whether transmission, to the specified mobile station, is required of two types of communications setting information (UL grant, UL timing advance), or only the UL timing advance, and transmits required information in the downlink shared data channel/downlink signaling control channel using a mobile station-specific identifier (C-RNTI) . For example, the radio access network apparatus 200 determines that the two types of communications settings are required at the time of handover, and determines that the UL timing advance only is required at the time of restarting downlink data transmission.

According to the embodiment of the present invention, eliminating unnecessary transmissions of UL grant, UL timing advance, or C-RNTI (Cell specific radio network temporal identifier) makes it possible to implement a mobile station, a radio access network apparatus, and a mobile communications system that allow an efficient use of downlink radio resources.

As described above, in order to reduce the probability of multiple mobile stations selecting the same Signature and thereby, causing collision, a dedicated signature provided in advance is allocated, for a certain period, to a mobile station already having C-RNTI. Typical examples of such a mobile station are: (1) a mobile station to which is allocated, at the time of handover, a dedicated signature and C-RNTI of a cell for handover to as a part of a handover command from a cell for handover from; and (2) a mobile station already having C-RNTI and to which mobile station is allocated, at the time of restarting downlink data transmission, a dedicated preamble used at the time of establishing uplink synchronization.

However, with such a method of decreasing the collision probability, if all of the dedicated channels or dedicated preambles are in use, it is necessary to wait for a dedicated preamble allocation until the dedicated preamble becomes available, causing a delay in the transmit timing of the handover command, and a delay in the restart of the downlink data transmission.

Then, if all the Dedicated preambles are being used (or if there is a shortage), a base station eNB instructs the mobile station UE to transmit a Random access preamble using one Signature randomly selected. More specifically, (1) as a part of a signal transmitted to the mobile station by the base station, some indicator (this may be called a Random access preamble transmission indicator, for example) indicating that the Random access preamble is to be transmitted or (2) a special Dedicated signature representing that a random access preamble is to be used in such a condition may be specified. For example, the Random access preamble transmit identifier (in (1)) may be expressed as a flag bit such as ON or OFF, or the Dedicated signature number may be set to zero (in other words, "0" is specified so that it corresponds to "Random access preamble".)

In this way, even if all dedicated preambles are being used, a mobile station can rapidly establish uplink synchronization and start or restart communications without delaying handover command transmission and downlink data transmission.

On the other hand, the mobile station which has received (1) a Random access preamble transmission indicator, or (2) a Dedicated signature number indicating that a Random access preamble is to be transmitted randomly selects one Signature out of Signatures transmittable as the Random access preamble according to an instruction from the base station.

As described above, while the present invention is described with reference to specific embodiments, the respective embodiments are merely exemplary, so that a skilled person will understand variations, modifications, alternatives, and replacements. While specific numerical value examples are used to facilitate understanding of the present invention, such numerical values are merely examples, so that any appropriate value may be used unless specified otherwise. For convenience of explanation, while the apparatus according to the embodiments of the present invention is explained using functional block diagrams, such an apparatus as described above may be implemented in hardware, software, or a combination thereof.

The mobile station, radio access network apparatus, and mobile communications system according to the present embodiments may be applied to mobile communications systems.

As described above, while the present invention is described with reference to specific embodiments, the respective embodiments are merely exemplary, so that a skilled person will understand variations, modifications, alternatives, and replacements. While specific numerical value examples are used to facilitate understanding of the present invention, such numerical values are merely examples, so that any appropriate value may be used unless specified otherwise. Breakdown of the respective embodiments is not essential to the present invention, so that two or more embodiments may be used as needed. For convenience of explanation, while the apparatus according to the embodiments of the present invention is explained using functional block diagrams, such an apparatus as described above may be implemented in hardware, software, or a combination thereof.

## Claims

1. A radio access network apparatus (200) dedicated for use in LTE wireless communications which is configured to communicate with a mobile station (100) using a dedicated uplink channel, a downlink shared data channel, or a downlink signaling control channel, said mobile station (100) being instructed to conduct handover to said radio access network apparatus (200), comprising:
a dedicated uplink channel allocating unit (204, 206) which is configured to, when a dedicated uplink channel provided in advance is available, allocate, to said mobile station (100) starting communications with said radio access network apparatus (200), a dedicated uplink channel to be used by the mobile station (100);
a dedicated channel reception detecting unit (210) which is configured to detect, on the allocated dedicated uplink channel, a reception of an uplink transmission from said mobile station (100);
a downlink transmitting unit (204) which is configured to, when the dedicated uplink channel reception of said mobile station (100) is detected, transmit a response to said mobile station (100) using the downlink shared data channel or the downlink signaling control channel based on a user-specific identifier; and
a reporting unit which is configured to, when a dedicated uplink channel provided in advance is not available, report, to said mobile station (100), that a random access preamble is to be used in uplink.

2. The radio access network apparatus (200) as claimed in claim 1, wherein
the dedicated uplink channel allocating unit (206) is configured to allocate an identifier to be used by the mobile station.

3. The radio access network apparatus (200) as claimed in claim 1 or 2,
wherein the dedicated uplink channel allocating unit (206) is configured to allocate a Signature to be used by the mobile station (100) for access preamble transmission.

4. A mobile station (100) dedicated for use in LTE wireless communications which is configured to communicate with a radio access network apparatus (200) using a dedicated uplink channel, a downlink shared data channel, or a downlink signaling control channel, said mobile station (100) being instructed to conduct handover to said radio access network apparatus (200), comprising
a dedicated uplink channel allocating information receiving unit (104) which is configured to, when starting communication with said radio access network apparatus (200) and when a dedicated uplink channel provided in advance is available, receive from said radio access network apparatus (200) allocation information on the dedicated uplink channel to be used;
a dedicated uplink channel setting unit (106) which is configured to set the allocated dedicated uplink channel;
an uplink transmit unit (102) is configured to transmit uplink on the set dedicated uplink channel;
a data receive unit (102) which is configured to receive downlink based on a user-specific identifier in response to the uplink transmission; and
a contentious channel information receiving unit, which is configured to, when a dedicated uplink channel provided in advance is not available, receive a report from said radio access network apparatus (200), that a random access preamble is to be used in uplink.

5. The mobile station (100) as claimed in claim 4, wherein
an identifier to be used by the mobile station (100) is received at the dedicated uplink channel allocating information receiving unit (104).

6. The mobile station as claimed in claim 4 or 5, wherein
a Signature to be used by the mobile station for access preamble is received at the dedicated uplink channel allocation information receiving unit (104).

7. A mobile communications system dedicated for use in LTE wireless communications comprising a mobile station (100) and a radio access network apparatus (200) configured to communicate using a dedicated uplink channel, a downlink shared data channel, or a downlink signaling control channel, said mobile station (100) being instructed to conduct handover to said radio access network apparatus (200),
wherein said radio access network apparatus (200) includes
a dedicated uplink channel allocating unit (204, 206) which is configured to, when a dedicated uplink channel provided in advance is available, allocate, to said mobile station (100) starting communications with said radio access network apparatus (200), a dedicated uplink channel to be used by said mobile station (100);
a dedicated uplink channel reception detecting unit (210) which is configured to detect, on the allocated dedicated uplink channel, a reception of an uplink transmission from said mobile station;
a downlink transmitting unit (204) which is configured to, when the dedicated uplink channel reception of said mobile station (100) is detected, transmit a response to said mobile station (100) using the downlink shared data channel or the downlink signaling control channel based on a user-specific identifier; and
a reporting unit which is configured to, when a dedicated uplink channel provided in advance is not available, report, to said mobile station (100), that a random access preamble is to be used in uplink,
and wherein said mobile station (100) includes
a dedicated uplink channel allocating information receiving unit (104) which is configured to, when starting communication with said radio access network apparatus (200) and when a dedicated uplink channel provided in advance is available, receive from said radio access network apparatus (200) allocation information on the dedicated uplink channel to be used;
a dedicated uplink channel setting unit (106) which is configured to set the allocated dedicated uplink channel;
an uplink transmit unit (102) which is configured to transmit uplink on the set dedicated uplink channel;
a data receive unit (102) which is configured to receive downlink with a user-specific identifier in response to the uplink transmission; and
a contentious channel information receiving unit, which is configured to, when a dedicated uplink channel provided in advance is not available, receive a report from said radio access network apparatus (200), that a random access preamble is to be used in uplink.

## Patentansprüche

1. Funkzugangsnetz-Vorrichtung (200), die zur Verwendung in LTE-Drahtloskommunikationen dediziert ist und die eingerichtet ist zum Kommunizieren mit einer Mobilstation (100) unter Verwendung eines dedizierten Uplink-Kanals, eines geteilten Downlink-Datenkanals oder eines Downlink-Signalisierungssteuerkanals, wobei der Mobilstation (100) befohlen wird, eine Übergabe zu der Funkzugangsnetz-Vorrichtung (200) durchzuführen, umfassend:
eine dedizierte Uplink-Kanal-Zuweisungseinheit (204, 206) die eingerichtet ist, wenn ein im Voraus bereitgestellter dedizierter Uplink-Kanal verfügbar ist, der Mobilstation (100), die Kommunikationen mit der Funkzugangsnetz-Vorrichtung (200) startet, einen dedizierten Uplink-Kanal zuzuweisen, der von der Mobilstation (100) zu verwenden ist;
eine dedizierte Kanal-Empfangserfassungseinheit (210), die eingerichtet ist, einen Empfang einer Uplink-Übertragung von der Mobilstation (100) auf dem zugewiesenen dedizierten Uplink-Kanal zu erfassen;
eine Downlink-Übertragungseinheit (204), die eingerichtet ist, wenn der dedizierte Uplink-Kanalempfang der Mobilstation (100) erfasst wird, eine Antwort an die Mobilstation (100) unter Verwendung des geteilten Downlink-Datenkanals oder des Downlink-Signalisierungsteuerkanals basierend auf einer benutzerspezifischen Kennung zu übertragen; und
eine Mitteilungseinheit, die eingerichtet ist, wenn der im Voraus bereitgestellte dedizierte Uplink-Kanal nicht verfügbar ist, der Mobilstation (100) mitzuteilen, dass eine Direktzugriffspräambel im Uplink zu verwenden ist.

2. Funkzugangsnetzwerk-Vorrichtung (200) nach Anspruch 1,
wobei
die dedizierte Uplink-Kanal-Zuweisungseinheit (206) eingerichtet ist zum Zuweisen einer von der Mobilstation zu verwendenden Kennung.

3. Funkzugangsnetzwerk-Vorrichtung (200) nach Anspruch 1 oder 2,
wobei die dedizierte Uplink-Kanal-Zuweisungseinheit (206) eingerichtet ist zum Zuweisen einer Signatur, die von der Mobilstation (100) für eine Zugriffspräambelübertragung zu verwenden ist.

4. Mobilstation (100), die zur Verwendung in LTE-Drahtloskommunikationen dediziert ist und die eingerichtet ist zum Kommunizieren mit einer Funkzugangsnetzwerk-Vorrichtung (200) unter Verwendung eines dedizierten Uplink-Kanals, eines geteilten Downlink-Datenkanals oder eines Downlink-Signalisierungssteuerkanals, wobei der Mobilstation (100) befohlen wird, eine Übergabe zu der Funkzugangsnetzwerk-Vorrichtung (200) durchzuführen, umfassend
eine dedizierte Uplink-Kanal-Zuweisungsinformation-Empfangseinheit (104), die eingerichtet ist, wenn Kommunikation mit der Funkzugangsnetzwerk-Vorrichtung (200) gestartet wird und wenn ein im Voraus bereitgestellter dedizierter Uplink-Kanal verfügbar ist, eine Zuweisungsinformation über den zu verwendenden dedizierten Uplink-Kanal von der Funkzugangsnetzwerk-Vorrichtung (200) zu empfangen;
eine dedizierte Uplink-Kanal-Einstelleinheit (106), die eingerichtet ist zum Einstellen des zugewiesenen dedizierten Uplink-Kanals;
eine Uplink-Übertragungseinheit (102), die eingerichtet ist zum Übertragen eines Uplinks auf dem eingestellten dedizierten Uplink-Kanal;
eine Datenempfangseinheit (102), die eingerichtet ist zum Empfangen eines Downlinks basierend auf einer benutzerspezifischen Kennung als Antwort auf die Uplink-Übertragung; und
eine umstrittene Kanalinformation-Empfangseinheit, die eingerichtet ist, wenn ein im Voraus bereitgestellter dedizierter Uplink-Kanal nicht verfügbar ist, eine Mitteilung von der Funkzugangsnetzwerk-Vorrichtung (200) zu empfangen, dass eine Direktzugriffspräambel im Uplink zu verwenden ist.

5. Mobilstation (100) nach Anspruch 4, wobei
eine von der Mobilstation (100) zu verwendende Kennung von der dedizierten Uplink-Kanal-Zuweisungsinformation-Empfangseinheit (104) empfangen wird.

6. Mobilstation nach Anspruch 4 oder 5, wobei
eine Signatur, die von der Mobilstation für eine Zugriffspräambel zu verwenden ist, von der dedizierten Uplink-Kanal-Zuweisungsinformation-Empfangseinheit (104) empfangen wird.

7. Mobilkommunikationssystem, das zur Verwendung in LTE-Drahtloskommunikationen dediziert ist und das eine Mobilstation (100) und eine Funkzugangsnetzwerk-Vorrichtung (200) umfasst, die eingerichtet sind zum Kommunizieren unter Verwendung eines dedizierten Uplink-Kanals, eines geteilten Downlink-Datenkanals oder eines Downlink-Signalisierungssteuerkanals, wobei der Mobilstation (100) befohlen wird, eine Übergabe zu der Funkzugangsnetzwerk-Vorrichtung (200) durchzuführen,
wobei die Funkzugangsnetzwerk-Vorrichtung (200) enthält
eine dedizierte Uplink-Kanal-Zuweisungseinheit (204, 206) die eingerichtet ist, wenn ein im Voraus bereitgestellter dedizierter Uplink-Kanal verfügbar ist, der Mobilstation (100), die Kommunikationen mit der Funkzugangsnetz-Vorrichtung (200) startet, einen dedizierten Uplink-Kanal zuzuweisen, der von der Mobilstation (100) zu verwenden ist;
eine dedizierte Kanal-Empfangserfassungseinheit (210), die eingerichtet ist, einen Empfang einer Uplink-Übertragung von der Mobilstation (100) auf dem zugewiesenen dedizierten Uplink-Kanal zu erfassen;
eine Downlink-Übertragungseinheit (204), die eingerichtet ist, wenn der dedizierte Uplink-Kanalempfang der Mobilstation (100) erfasst wird, eine Antwort an die Mobilstation (100) unter Verwendung des geteilten Downlink-Datenkanals oder des Downlink-Signalisierungsteuerkanals basierend auf einer benutzerspezifischen Kennung zu übertragen; und
eine Mitteilungseinheit, die eingerichtet ist, wenn der im Voraus bereitgestellte dedizierte Uplink-Kanal nicht verfügbar ist, der Mobilstation (100) mitzuteilen, dass eine Direktzugriffspräambel im Uplink zu verwenden ist,
und wobei die Mobilstation (100) enthält
eine dedizierte Uplink-Kanal-Zuweisungsinformation-Empfangseinheit (104), die eingerichtet ist, wenn Kommunikation mit der Funkzugangsnetzwerk-Vorrichtung (200) gestartet wird und wenn ein im Voraus bereitgestellter dedizierter Uplink-Kanal verfügbar ist, eine Zuweisungsinformation über den zu verwendenden dedizierten Uplink-Kanal von der Funkzugangsnetzwerk-Vorrichtung (200) zu empfangen;
eine dedizierte Uplink-Kanal-Einstelleinheit (106), die eingerichtet ist zum Einstellen des zugewiesenen dedizierten Uplink-Kanals;
eine Uplink-Übertragungseinheit (102), die eingerichtet ist zum Übertragen eines Uplinks auf dem eingestellten dedizierten Uplink-Kanal;
eine Datenempfangseinheit (102), die eingerichtet ist zum Empfangen eines Downlinks mit einer benutzerspezifischen Kennung als Antwort auf die Uplink-Übertragung; und
eine umstrittene Kanalinformation-Empfangseinheit, die eingerichtet ist, wenn ein im Voraus bereitgestellter dedizierter Uplink-Kanal nicht verfügbar ist, eine Mitteilung von der Funkzugangsnetzwerk-Vorrichtung (200) zu empfangen, dass eine Direktzugriffspräambel im Uplink zu verwenden ist.

## Revendications

1. Appareil de réseau d'accès radio (200) dédié à une utilisation dans des communications sans fil LTE qui est configuré pour communiquer avec une station mobile (100) en utilisant un canal de liaison montante dédié, un canal de données partagé de liaison descendante, ou un canal de commande de signalisation de liaison descendante, ladite station mobile (100) se voyant donner pour instruction de réaliser un transfert vers ledit appareil de réseau d'accès radio (200), comprenant :
une unité d'attribution de canal de liaison montante dédié (204, 206) qui est configurée pour, lorsqu'un canal de liaison montante dédié fourni à l'avance est disponible, attribuer, à ladite station mobile (100) commençant des communications avec ledit appareil de réseau d'accès radio (200), un canal de liaison montante dédié devant être utilisé par la station mobile (100) ;
une unité de détection de réception de canal dédié (210) qui est configurée pour détecter, sur le canal de liaison montante dédié attribué, une réception d'une transmission de liaison montante en provenance de ladite station mobile (100) ;
une unité de transmission de liaison descendante (204) qui est configurée pour, lorsque la réception de canal de liaison montante dédié de ladite station mobile (100) est détectée, transmettre une réponse à ladite station mobile (100) en utilisant le canal de données partagé de liaison descendante ou le canal de commande de signalisation de liaison descendante sur la base d'un identificateur spécifique à un utilisateur ; et
une unité de rapport qui est configurée pour, lorsqu'un canal de liaison montante dédié fourni à l'avance n'est pas disponible, rapporter, à ladite station mobile (100), qu'un préambule d'accès aléatoire doit être utilisé en liaison montante.

2. Appareil de réseau d'accès radio (200) selon la revendication 1, dans lequel
l'unité d'attribution de canal de liaison montante dédié (206) est configurée pour attribuer un identificateur devant être utilisé par la station mobile.

3. Appareil de réseau d'accès radio (200) selon la revendication 1 ou 2,
dans lequel l'unité d'attribution de canal de liaison montante dédié (206) est configurée pour attribuer une Signature devant être utilisée par la station mobile (100) pour la transmission de préambule d'accès.

4. Station mobile (100) dédiée à une utilisation dans des communications sans fil LTE qui est configurée pour communiquer avec un appareil de réseau d'accès radio (200) en utilisant un canal de liaison montante dédié, un canal de données partagé de liaison descendante, ou un canal de commande de signalisation de liaison descendante, ladite station mobile (100) se voyant donner pour instruction de réaliser un transfert vers ledit appareil de réseau d'accès radio (200), comprenant
une unité de réception d'informations d'attribution de canal de liaison montante dédié (104) qui est configurée pour, lors du commencement d'une communication avec ledit appareil de réseau d'accès radio (200) et lorsqu'un canal de liaison montante dédié fourni à l'avance est disponible, recevoir en provenance dudit appareil de réseau d'accès radio (200) des informations d'attribution sur le canal de liaison montante dédié devant être utilisé ;
une unité d'établissement de canal de liaison montante dédié (106) qui est configurée pour établir le canal de liaison montante dédié attribué ;
une unité de transmission de liaison montante (102) est configurée pour la transmission de liaison montante sur le canal de liaison montante dédié établi ;
une unité de réception de données (102) qui est configurée pour la réception de liaison descendante sur la base d'un identificateur spécifique à un utilisateur en réponse à la transmission de liaison montante ; et
une unité de réception d'informations de canal contentieux, qui est configurée pour, lorsqu'un canal de liaison montante dédié fourni à l'avance n'est pas disponible, recevoir un rapport en provenance dudit appareil de réseau d'accès radio (200), selon lequel un préambule d'accès aléatoire doit être utilisé en liaison montante.

5. Station mobile (100) selon la revendication 4, dans laquelle
un identificateur devant être utilisé par la station mobile (100) est reçu au niveau de l'unité de réception d'informations d'attribution de canal de liaison montante dédié (104).

6. Station mobile selon la revendication 4 ou 5, dans laquelle
une Signature devant être utilisée par la station mobile pour le préambule d'accès est reçue au niveau de l'unité de réception d'informations d'attribution de canal de liaison montante dédié (104).

7. Système de communications mobiles dédié à une utilisation dans des communications sans fil LTE comprenant une station mobile (100) et un appareil de réseau d'accès radio (200) configurés pour communiquer en utilisant un canal de liaison montante dédié, un canal de données partagé de liaison descendante, ou un canal de commande de signalisation de liaison descendante, ladite station mobile (100) se voyant donner pour instruction de réaliser un transfert vers ledit appareil de réseau d'accès radio (200),
dans lequel ledit appareil de réseau d'accès radio (200) inclut
une unité d'attribution de canal de liaison montante dédié (204, 206) qui est configurée pour, lorsqu'un canal de liaison montante dédié fourni à l'avance est disponible, attribuer, à ladite station mobile (100) commençant des communications avec ledit appareil de réseau d'accès radio (200), un canal de liaison montante dédié devant être utilisé par ladite station mobile (100) ;
une unité de détection de réception de canal de liaison montante dédié (210) qui est configurée pour détecter, sur le canal de liaison montante dédié attribué, une réception d'une transmission de liaison montante en provenance de ladite station mobile ;
une unité de transmission de liaison descendante (204) qui est configurée pour, lorsque la réception de canal de liaison montante dédié de ladite station mobile (100) est détectée, transmettre une réponse à ladite station mobile (100) en utilisant le canal de données partagé de liaison descendante ou le canal de commande de signalisation de liaison descendante sur la base d'un identificateur spécifique à un utilisateur ; et
une unité de rapport qui est configurée pour, lorsqu'un canal de liaison montante dédié fourni à l'avance n'est pas disponible, rapporter, à ladite station mobile (100), qu'un préambule d'accès aléatoire doit être utilisé en liaison montante.
et dans lequel ladite station mobile (100) inclut
une unité de réception d'informations d'attribution de canal de liaison montante dédié (104) qui est configurée pour, lors du commencement d'une communication avec ledit appareil de réseau d'accès radio (200) et lorsqu'un canal de liaison montante dédié fourni à l'avance est disponible, recevoir en provenance dudit appareil de réseau d'accès radio (200) des informations d'attribution sur le canal de liaison montante dédié devant être utilisé ;
une unité d'établissement de canal de liaison montante dédié (106) qui est configurée pour établir le canal de liaison montante dédié attribué ;
une unité de transmission de liaison montante (102) qui est configurée pour la transmission de liaison montante sur le canal de liaison montante dédié établi ;
une unité de réception de données (102) qui est configurée pour la réception de liaison descendante avec un identificateur spécifique à un utilisateur en réponse à la transmission de liaison montante ; et
une unité de réception d'informations de canal contentieux, qui est configurée pour, lorsqu'un canal de liaison montante dédié fourni à l'avance n'est pas disponible, recevoir un rapport en provenance dudit appareil de réseau d'accès radio (200), selon lequel un préambule d'accès aléatoire doit être utilisé en liaison montante.
